# EUROPÄISCHE PATENTSCHRIFT

(11) **EP 0 800 865 B1**
(45) Veröffentlichungstag und Bekanntmachung des Hinweises auf die Patenterteilung: **22.01.2003**
(21) Anmeldenummer: 97105781.5
(22) Anmeldetag: 08.04.1997
(51) Int. Cl.: B01L 9/02

(54) **Laborarbeitsplatz**
Laboratory work station
Poste de travail de laboratoire

(30) Priorität: 11.04.1996 DE 19614370
(43) Veröffentlichungstag der Anmeldung: 15.10.1997
(73) Patentinhaber: Waldner Laboreinrichtungen GmbH & Co., 88239 Wangen/Allgäu (DE)
(72) Erfinder: Sigg, Bruno, 88239 Wangen-Gaisbühl (DE); Kreuzer, Konrad, 87493 Lauben (DE); Liebsch, Jürgen, 88161 Lindenberg (DE)
(74) Vertreter: WILHELMS, KILIAN & PARTNER Patentanwälte

(56) Entgegenhaltungen:
- EP-A- 0 486 789
- DE-U- 9 316 330
- FR-A- 2 411 633
- US-A- 4 320 935
- US-A- 4 544 214

## Beschreibung

Die Erfindung betrifft einen Laborarbeitsplatz mit wenigstens einer Energiezelle mit daran vorgesehener Medienversorgung und Einbauten und einem vor der Energiezelle stehenden Arbeitstisch, wobei die Energiezelle aus zwei vertikalen Ständern aufgebaut ist, die durch wenigstens zwei Querträger miteinander verbunden sind und die Einbauten in Form eines Satzes von austauschbaren Modulen mit verschiedenen Funktionsmöglichkeiten vorgesehen sind, die über der Arbeitstischhöhe mit Halterungen angebracht sind. Ein derartiger Laborarbeitsplatz ist aus der EP-A-0486789 bekannt.

Aus der DE-U-9316330 ist es weiterhin bekannt, bei einem Aufbau für Labor- oder Arbeitstische, der an der Tischplattenoberseite angeordnet ist und mehrere Querträger aufweist, die vertikal distanziert sind, Einbauten direkt an den Querträgern anzubringen.

Laborarbeitsplätze sind für Arbeiten in Laboratorien aller Art, insbesondere in Schulen, Hochschulen, Instituten und Firmen vorgesehen. Sie benötigen neben den Arbeitsflächen und Stauräumen eine Anzahl von Medienversorgungen verschiedenster Art sowie weitere Abstellflächen.

Laborgebäude sind komplizierte Bauwerke, die wegen ihrer Komplexität lange Planungs- und Bauzeiten erfordern. Insbesondere bei öffentlichen Gebäuden sind oftmals die bei der Gebäudeplanung vorgesehenen Nutzer und die tatsächlichen Nutzer beim Einzug verschieden. Darüber hinaus ändern sich in der Forschung die Arbeitsinhalte ständig, was bedeutet, daß ein Labor aufgrund der langen Planungszeit beim Einzug oftmals nicht mehr den Erfordernissen genügt. Da aber bei den bisher üblichen Laborarbeitsplatzsystemen spätere Änderungen kaum möglich oder mit hohen Kosten verbunden sind, werden von den Nutzern in der Regel sehr hohe Anforderungen an die Nutzungsmöglichkeiten gestellt, damit auch erst später aufgenommene Tätigkeiten und Arbeiten ausgeführt werden können, ohne daß erhebliche Änderungen notwendig sind. Diese Anforderungen betreffen insbesondere die Medienbestückung, die Chemikalienbeständigkeit und die Ablageflächen. Das hat wiederum zur Folge, daß bisher Laboratorien in ihrer Anschaffung sehr teuer und meist um 100%, insbesondere in den Medienbestückung, überdimensioniert sind.

Laborarbeitsplätze werden üblicherweise linear parallel zu den Außenwänden eines Laborraumes angeordnet. Ein Standardarbeitsplatz der eingangs genannten Art umfaßt eine Energiezelle mit daran vorgesehenen Medienversorgungen. Die Energiezelle besteht aus zwei vertikalen Ständern, die mit Querträgern verbunden sind. Im unteren Bereich befinden sich die fest installierten Durchgangsleitungen für die Medien, die mehrere Arbeitsplätze miteinander verbinden. In einer Höhe von etwa 900 bis 1200 mm ist eine Medienleiste vorgesehen, in der linear nebeneinander Medienarmaturen angebracht sind. Die Medienarmaturen werden von vorne in die Medienleiste eingeschraubt und oberhalb der Medienleiste befindet sich über die gesamte Breite der Energiezelle ein Elektrokanal, in den Elektroentnahmen und Absicherungen eingebaut sind. Oberhalb des Elektrokanales befinden sich weitere Einbauten, beispielsweise Glas- und Geräteablagen, die wiederum über die gesamte Breite der Energiezelle gehen. Vor der Energiezelle steht ein Arbeitstisch, beispielsweise aus einem Stahlgestell oder einem tragenden Unterbau, auf dem eine Tischplatte angeordnet ist.

Diese übliche Ausbildung eines Laborarbeitsplatzes hat die folgenden Nachteile:
1. Die Zugänglichkeit zu den Einbauten und Medienversorgungen ist schwierig, so daß Nachrüstungen und Änderungen mit erheblichen Problemen verbunden sind. Zum Demontieren der üblicherweise vorgesehenen Medienleiste müssen beispielsweise alle Armaturen abmontiert werden.
2. Da die Medienversorgungen linear angebracht sind, ist die Bestückung unflexibel. Bei starker Bestückung an Medienversorgungen reicht die Bestückungsdichte oft nicht aus. Bei niedriger Bestückung wird Platz verschwendet, da die Medienleiste und/oder der Elektrokanal über die gesamte Breite gehen.
3. Die Unterbauten und Tische sind von den vertikalen Ständern abhängig, so daß die Raster der vertikalen Ständer und der Tische gleich sein müssen.

Aus dem deutschen Gebrauchsmuster DE-U-90 17 222.3 ist ein Laborarbeitsplatz bekannt, bei dem an Stelle von vertikalen Ständern, die üblicherweise rohrförmig ausgebildet sind, ein Dreieckständer vorgesehen ist. Mit Hilfe eines derartigen Dreieckständers können Ständerkombinationen zusammengestellt werden. Es sind somit Innen- und Außenecken möglich und durch Vorspringen der Energieleisten kann eine punktförmige starke Bestückung in Form einer Säule erzielt werden.

Dieses bekannte Laborarbeitsplatzsystem ist jedoch hinsichtlich der Medieninstallation stark eingeschränkt. So ist die Medienentnahme nur in vertikalen Pfosten möglich, die darüber hinaus in Elektro- und Sanitärpfosten aufgeteilt sind. Das hat zur Folge, daß eine Medienentnahme nur punktförmig in Abständen der Rasterbreite von 1200 bzw. 1500 mm möglich ist. Das stellt eine starke Einschränkung der Flexibilität dar. Die Installationsführung der Leitungen ist weiterhin sehr kompliziert, da alle Stichleitungen in den engen Dreieckständern geführt werden müssen. Das ist bereits bei der ersten Installation aufwendig, Umbauten werden dadurch erheblich erschwert. Wenn die Medien von der Decke her zugeführt werden, muß darüber hinaus eine Energiesäule gesetzt werden. An der Stelle dieser Säule ist keinerlei Bestückung möglich, was einen hohen Platzverlust darstellt. Die Dreieckständer sind für die Medienführung andererseits zu klein. Schließlich werden die Ablagen an den vertikalen Pfosten befestigt, so daß diese von der Anordnung und Position der Pfosten abhängen.

Das aus dem deutschen Gebrauchsmuster DE-U-90 17 222.3 bekannte Laborarbeitsplatzsystem hat somit in der Grundrißgestaltung gegenüber herkömmlichen Systemen Vorteile, ist jedoch gegenüber den Standardsystemen in Hinblick auf die Medienbestückung eher nachteilig anzusehen.

Aus der EP-A-0 486 789 ist ein weiteres Laborarbeitsplatzsystem bekannt, das aus perforierten Vertikalständern und perforierten Traversen aufgebaut ist. Die Durchgangsleitungen werden innerhalb von Ausbrüchen der Ständer gefahren und die vertikalen Stich- und Zugangsleitungen verlaufen innerhalb der perforierten Traversen. Dieses Laborarbeitsplatzsystem ist in Endlosbauweise aufgebaut, so daß sich an jedem Stoß nur ein Ständerelement befindet. Bei diesem System sind weiterhin die Arbeitstische in die Ständerelemente eingehängt, so daß die Ständer als tragende Teile der Arbeitstische funktionieren. Die ELT-Bestückung befindet sich in Elektromodulen, die Sanitärentnahme in Sanitärmodulen, wobei diese Module eine Größe von etwa 600 mal 300 mm haben. Ablagen sind an Querrohren befestigt, die vor den Ständern verlaufen. Es ist weiterhin vorgeschlagen, daß die Ständerelemente gleichzeitig die Laborwände darstellen.

Das aus der EP-A-0 486 789 bekannte Laborarbeitsplatzsystem hat auf den ersten Blick Vorteile, erweist sich jedoch bei näherer Betrachtung als nicht praxisgerecht. Die verwendete Endlosbauweise erschwert nämlich eine exakte Größenberechnung durch den Nutzer. Zudem gibt es bei der Demontage unfertige Teilsysteme, die nicht weiter verwendet werden können. Weiterhin ist die Einbringung der Durchgangsleitungen sehr unpraktisch, da bei jedem Ständer Verschraubungen gesetzt werden müssen. Eine Nachrüstung ist mit erheblichem Aufwand verbunden. Die Verwendung der Ständer als tragende Tischelemente ist gleichfalls unpraktisch, da bei Änderungen der gesamte Tisch demontiert werden muß. Die verwendeten sehr großen Medienmodule sind ebenfalls unpraktisch, da sie nicht demontierbar sind. Zudem ist kein Austausch eines Medienmodules mit einem Ablagemodul möglich.

Die der Erfindung zugrunde liegende Aufgabe besteht dem gegenüber darin, den Laborarbeitsplatz der eingangs genannten Art so auszubilden, daß er eine hohe Flexibilität zur Umrüstung, Anpassung u.s.w. während der Planungs-, Bau- und Nutzungsphase hat.

Diese Aufgabe wird gemäß der Erfindung dadurch gelöst, daß die Halterungen an den Querträgern der Energiezelle vorgesehen sind und aus Klemmprofilen bestehen, die in einem Stück mit den Querträgern ausgebildet sind.

Bei der erfindungsgemäßen Ausbildung ist eine große Flexibilität insofern erzielt, als Änderungen während der Planungsphase, bei der Montage, bei der die Nutzer des Labors die Laboreinrichtung zum ersten Mal körperlich sehen, und bei Nutzungsänderungen leicht und weitgehend ohne Inanspruchnahme von Fachfirmen möglich sind. Das eröffnet einen Weg, Laboratorien nutzungsgerecht einzurichten, ohne daß diese bei der Planung stark überdimensioniert werden. Das Grundprinzip der erfindungsgemäßen Ausbildung, mit der das erreicht wird, besteht dabei darin, daß eine strenge Modularität aller Bauelemente eingehalten wird, alle Module austauschbar sind und der Aufbau rasterartig aus Energiezellen und entsprechenden Modulen aufgebaut ist. Im Gegensatz zu bekannten Systemen ist eine Trennung der Medienversorgung d.h. der Energiezelle und der Möbel, d.h. der vor der Energiezelle stehenden Arbeitstische vorgesehen und wird eine Endlosbauweise vermieden.

Besonders bevorzugte Ausgestaltungen des erfindungsgemäßen Laborarbeitsplatzes sind Gegenstand der Patentansprüche 2 bis 11.

Im folgenden wird anhand der zugehörigen Zeichnung ein besonders bevorzugtes Ausführungsbeispiel näher beschrieben. Es zeigen
Fig. 1 eine Seitenansicht einer Energiezelle ohne Labortisch,
Fig. 2 eine perspektivische Ansicht eines Querträgers der Energiezelle,
Fig. 3a eine Schnittansicht durch einen Querträger mit zwei Modulen,
Fig. 3b in einer perspektivischen Ansicht eine Einzelheit eines Befestigungsclips,
Fig. 3c ein Montagewerkzeug in einer Seitenansicht,
Fig. 4 eine Seitenansicht eines Arbeitsplatzes mit Arbeitstisch und Sanitärmodul,
Fig. 5 eine Seitenansicht eines Arbeitsplatzes mit Arbeitstisch und Elektromodul,
Fig. 6a eine Vorderansicht eines kompletten Laborarbeitsplatzes,
Fig. 6b eine Vorderansicht des in Fig. 6a dargestellten Laborarbeitstisches nach eine Umrüstung,
Fig. 7a eine Einzelheit einer Clipbefestigung für ein Modul,
Fig. 7b eine Einzelheit einer Clipbefestigung für ein Modul mit Sicherungsschraube,
Fig. 8 ein Leermodul,
Fig. 9 ein Elektromodul,
Fig. 10 ein Stativmodul,
Fig. 11 ein Ablagemodul,
Fig. 12 ein Glasablagemodul,
Fig. 13 ein Beckenmodul,
Fig. 14 ein Sanitärentnahmemodul,
Fig. 15 die Verdrahtung von Elektromodulen,
Fig. 16, 16a einen querverlaufenden Träger mit durchgehendem Klemmprofil,

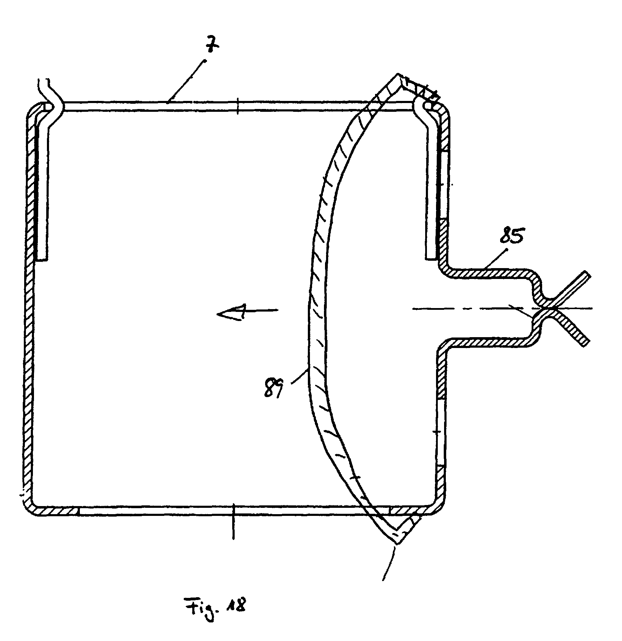

Fig. 17, 17a einen querverlaufenden Träger mit eingeformtem Klemmprofil und
Fig. 18 einer querverlaufenden Träger mit Federklammer.

Ein Laborarbeitsplatz besteht im wesentlichen aus einer Energiezelle und einem davor stehenden Arbeitstisch. Der Arbeitstisch trägt eine Arbeitsplatte, auf dem beispielsweise Versuche ablaufen.

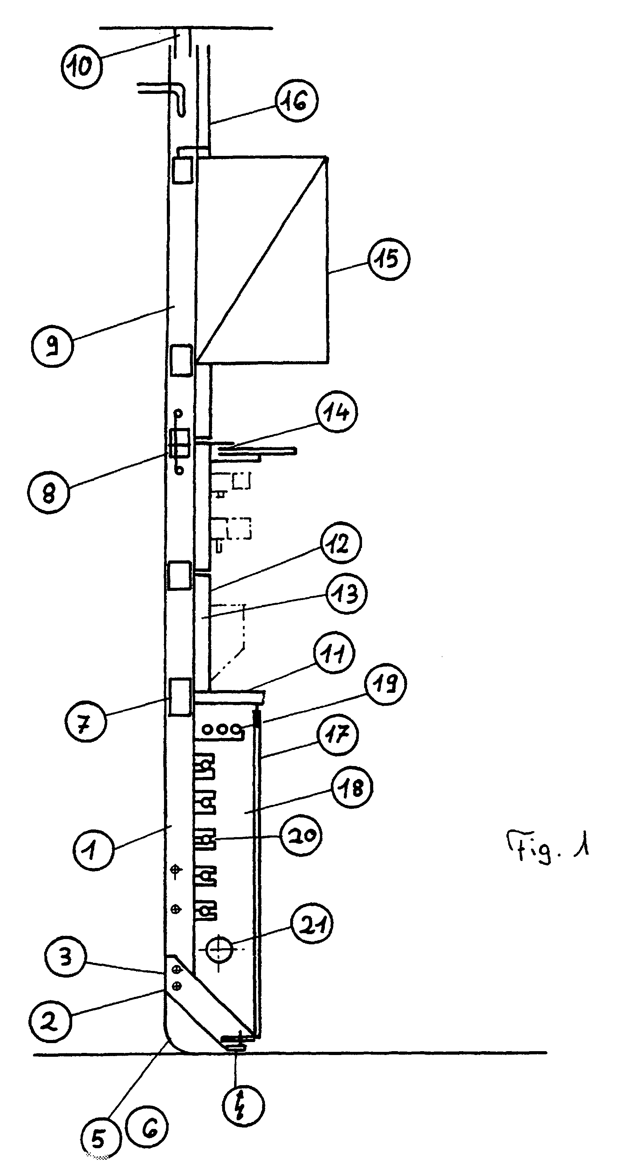

Wie es in Fig. 1 dargestellt ist, ist die Energiezelle aus einem Tragechassis aufgebaut, an dem Module angebracht werden können. Das Tragechassis besteht aus zwei vertikalen Ständern oder Ständerprofilen 1, die an ihrer Innenseite Loch- oder Rasterbohrungen 3 zum Anbringen von Querträgern aller Art aufweisen. Am unteren Ende der Ständerprofile 1 befindet sich ein Ständerfuß 2, der über eine Nivellierungseinrichtung 4 Bodenunebenheiten ausgleicht. Die Ständerprofile 1 gehen nicht bis zum Boden sondern lassen einen Spalt 5 zum Boden, so daß die Ständerprofile 1 unabhängig von den Bodenfliesen 6 angeordnet werden können. Über Tischplattenhöhe sind die Ständerprofile 1 mit Querträgern 7 verbunden, die an den Rasterbohrungen 3 höhenverstellbar befestigt sind. Die Ständerprofile 1 können im Bedarfsfall mittels einer Ständerverlängerung 9 aus einem weiteren Ständerprofil bis zur Decke verlängert werden. Sie können dann mittels eines Deckenankers 10 an der Decke befestigt sein. Auf der Höhe der Arbeitstischplatte, d.h. auf einer Höhe von 720 oder 900 mm befindet sich eine Konsole 11. Der Raum zwischen dem Ständerfuß und der Konsole 11 ist der Installationsraum 18 für horizontale Versorgungsleitungen. Im oberen Teil dieses Raumes sind die ELT-Durchgangsleitungen 19 geführt, darunter liegen die Sanitärleitungen 20. Es können weiterhin Schnüffelleitungen und Abwasserleitungen 21 in diesem Raum geführt sein.

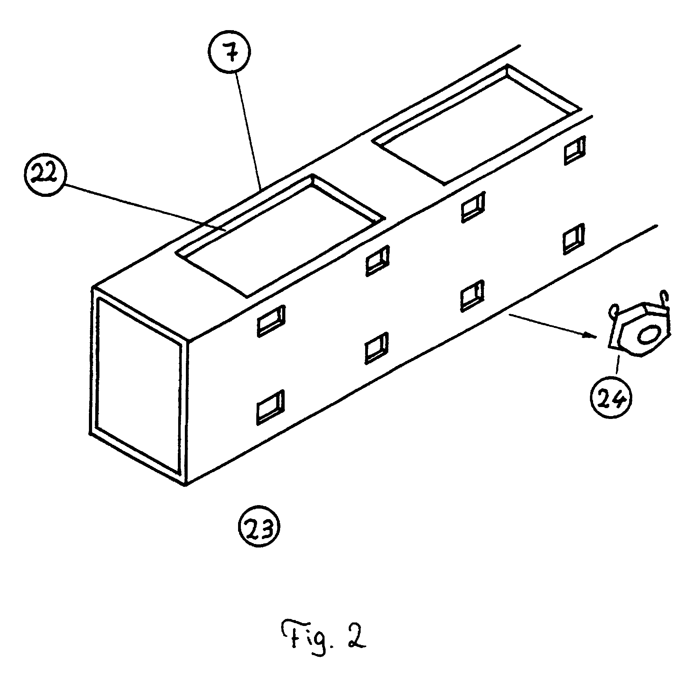

Oberhalb der Konsole 11 sind wenigstens zwei Querträger 7 vorgesehen, an denen wenigstens eine horizontale Reihe von Modulen 12 befestigt werden kann. Die Module 12 können bis zur Decke reichen. Es ist jedoch gleichfalls möglich, Hängeschränke 15 oder Verblendungen 16 an den Querträgern 7 zu befestigen, wobei dann, wenn die Verblendungen 16 schallhemmend ausgeführt sind, die Energiezelle auch als Raumtrenner oder Raumteiler dienen kann. Wie es in Fig. 2 dargestellt ist, sind die Querträger 7 mit vertikalen Ausnehmungen 22 versehen, durch die bei hoher Stabilität der Querträger 7 vertikale Leitungen geführt werden können. Diese Leitungen können Stichleitungen zu Armaturen oder Zugangsleitungen von der Decke in die Energiezelle sein.

An den Querträgern 7 sind frontseitig Ausstanzungen 23 vorgesehen, in die zum Beispiel Käfigmuttern 24 eingelegt werden können. Es können jedoch auch Klemmteile zur Aufnahme von Blechschrauben eingelegt sein. Mittels Clips 25 oder Klemmprofilen können verschiedene Module 12 am Querträger 7 angebracht werden. Die Module 12 haben eine Tiefe von etwa 25 mm.

Bei einem derartigen Aufbau ergibt sich für die gesamte Energiezelle eine eindeutige Festlegung, wie die Medienleitungen unabhängig voneinander geführt werden können. Die Durchgangsleitungen sind im horizontalen Raum 18 geführt, der Raum zwischen den vertikalen Ständerprofilen 1 ist für vertikale Leitungen reserviert, die ggf. durch die Ausnehmungen 22 in den Querträgern 7 geführt sind. Im Raum 13 innerhalb der Module 12 können im Bedarfsfall kurze Querleitungen zwischen den Modulen gelegt sein.

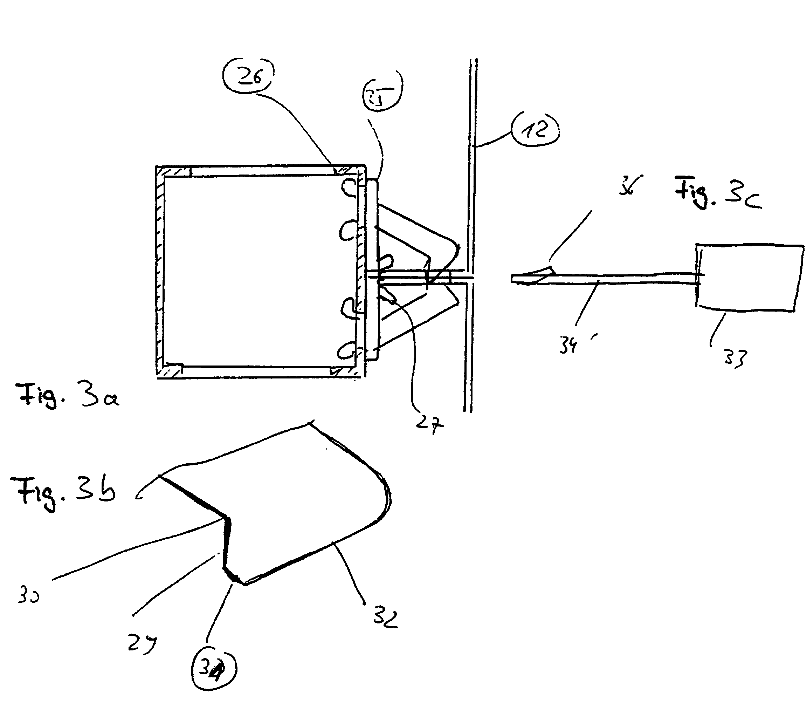

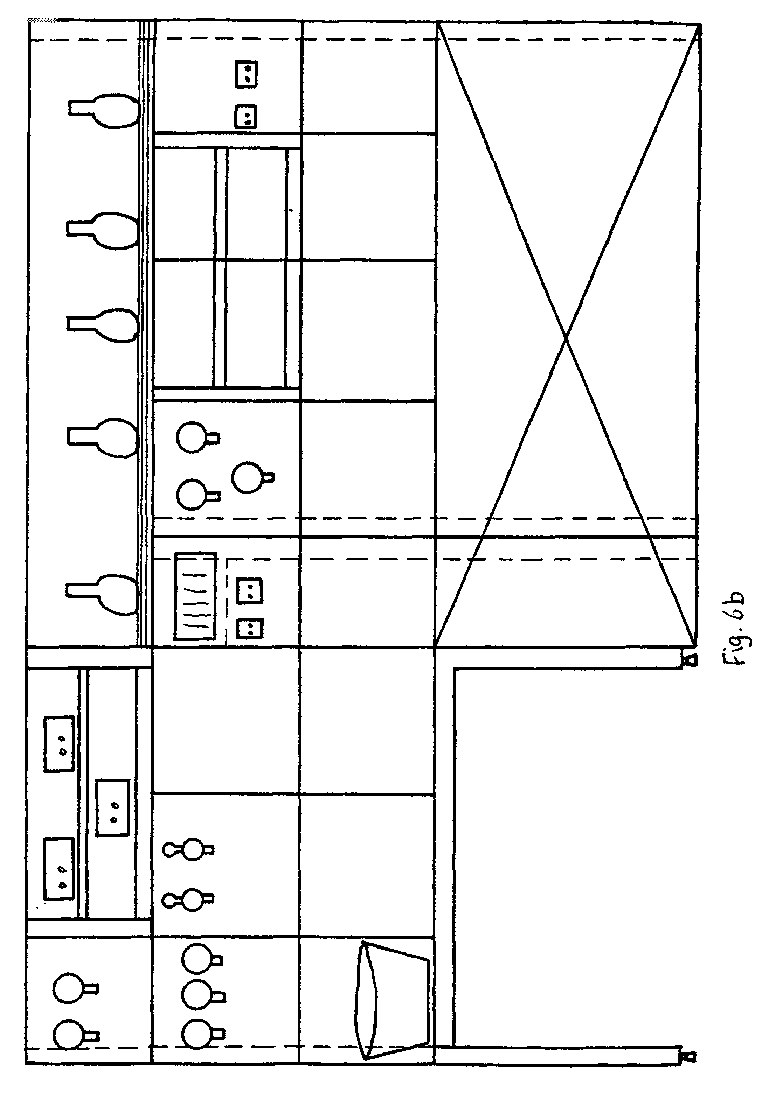

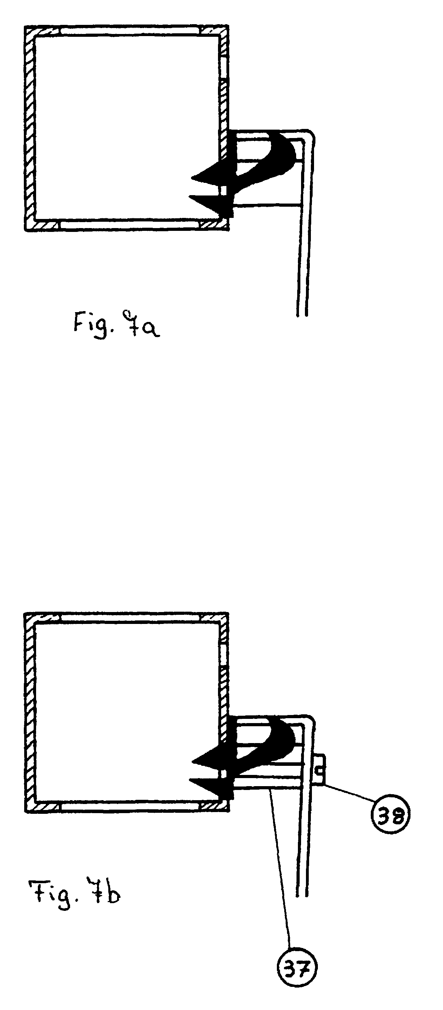

In Fig. 3 (nicht unter Anspruch 1 follend) ist dargestellt, wie die Module 12 an der Energiezelle, d.h. am Querträger 7 der Energiezelle befestigt sind. Die Befestigung der Module 12 erfolgt gemäß Fig. 3a mittels eines Clip 25, der eine Führung 27 für die Module 12 aufweist. An dieser Führung 27 sind die Module 12 bezüglich der Höhe und der Tiefe geführt. Die Module 12 sind zusätzlich mittels einer Rastnase 26 des Clips befestigt. Die Rastnase 26 ragt durch eine Ausnehmung in das Modul 12. Durch eine Clipvorspannung schiebt sich die Rastnase 26 durch das Modul 12, bis das Modul 12 an einer Anlagefläche 30 anliegt, wobei eine Anschlagfläche 29 ein Herausnehmen des Moduls 12 kraftschlüssig verhindert. Eine Demontage ist mittels eines Demontagewerkzeuges 33 (Fig. 3c) möglich. Das Demontagewerkzeug 33 drückt an der Anlagefläche 30 den Clip 25 aus dem Modul 12 heraus. Mittels eines schrägen Lappens 36 des Demontagewerkzeuges 33 kann dann das Modul 12 herausgezogen werden. Am Ende gleitet eine Abweiserschräge 31 an der Wanddicke des Moduls 12 nach außen. Soll ein Modul 12 befestigt werden, so kann das auch mit einem einzelnen Clip erfolgen. Die Clips können zusätzlich einen Dom 37 aufweisen (Fig. 7a, 7b). Mit derartigen Clips können Module 12 mit schwerer Last zusätzlich mittels einer Schraube 38 befestigt werden, die in den Dom 37 geschraubt wird.

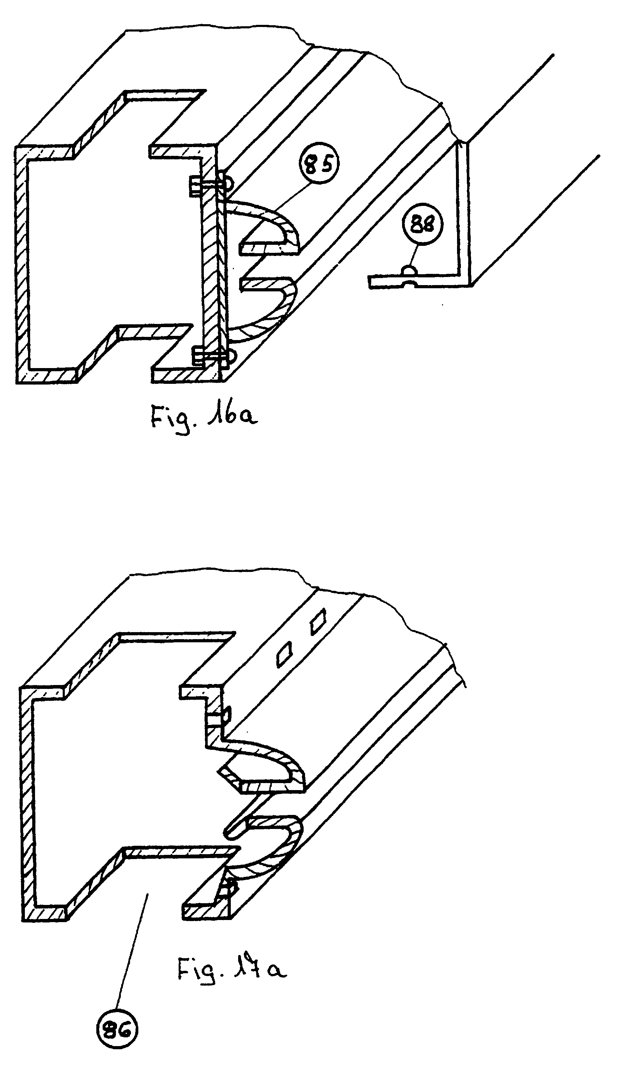

Fig. 16 zeigt eine alternative Befestigungsart für die Module 12. Anstelle von Clips sind durchgehende Klemmprofile 85 an den Querträgern vorgesehen, die die Module 12 halten. Das ist dann von Vorteil, wenn für Verblendungen größere Module 12 benötigt werden. Ein derartiges Klemmprofil 85 kann mittels Käfigmuttern am Querträger 7 der Energiezelle befestigt sein (nicht unter Anspruch 1 fallend). Nach Anspruch 1 ist das Klemmprofil am Querträger 7 angeformt, d.h. Klemmprofil und Querträger sind in einem Profilteil 86 ausgebildet, was ein sehr montagefreundliches Ausführungsbeispiel darstellt.

Fig. 18 zeigt ein Ausführungsbeispiel mit am Querträger angeformten durchgehenden Klemmprofilen 85 zum Aufklemmen und Halten der Module 12, bei dem zusätzlich Federklammern 89 vorgesehen sind, die im Querprofil 7 eingeschnappt sind und die Klemm- oder Haltekraft der Klemmprofile 85 dadurch erhöhen, daß sie diese zusammendrücken. Derartige Federkammern 89 werden dann eingesetzt, wenn z.B. bei Armatureinbauten eine hohe Haltekraft benötigt wird. Die Federklammern 89 können in Form von Spannhaken ausgebildet sein, wie es in Fig. 18 dargestellt ist.

Bei der Montage wird ein Modul 12 in ein Klemmprofil 85 eingeschnappt, so daß es dort mit der am Modul 12 vorgesehen Rastnase hält. Durch einen Ruck, der bewirkt, daß die Rastnase die Federn der Klemmprofile 85 verläßt, könnte das Modul jedoch abgezogen werden. Das wird durch das Aufbringen der Federklammern 89 verhindert, die die Haltekraft der Klemmprofile 85 so erhöhen, daß das Modul 12 nicht ohne weiteres entfernt werden kann.

Wenn die zusätzliche Federklammern 89 nicht benötigt werden, können sie mit einem Werkzeug, z.B. einem spachtelartigen Werkzeug von vorne durch das Klemmprofil 85 nach hinten geschoben werden, bis sie in den Ausschnitt im Querträger 7 fallen.

Die Module 12 haben alle die gleichen Hauptabmessungen und die gleiche Art der Befestigung an den Querträgern 7. Alle Module 12 sind gegeneinander austauschbar.

Die Module 12 sind in Form eines Modulsatzes vorgesehen, der wenigstens aus den folgenden Einzelmodulen besteht:

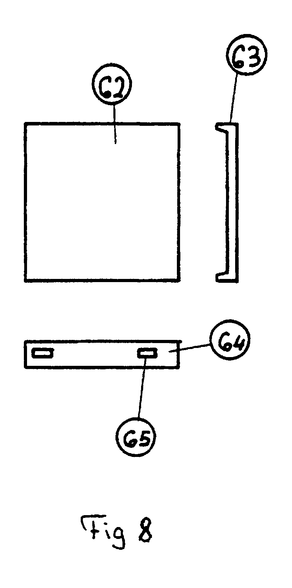

### 1. Blind- oder Leermodul (Fig. 8)

Das Blind- oder Leermodul 62 ist die Basiseinheit für die bestückten Module. Das Leermodul 62 besteht aus einer ebenen Fläche mit rechteckigem Format und ist an allen vier Seiten umgekantet. Die seitlichen Flächen haben Aussparungen für Kabeldurchführungen. Die oberen und unteren Flächen weisen eine oder mehrere Bohrungen oder Ausprägungen auf, um das Leermodul 62 an einen Quertäger 7 zu clipsen.

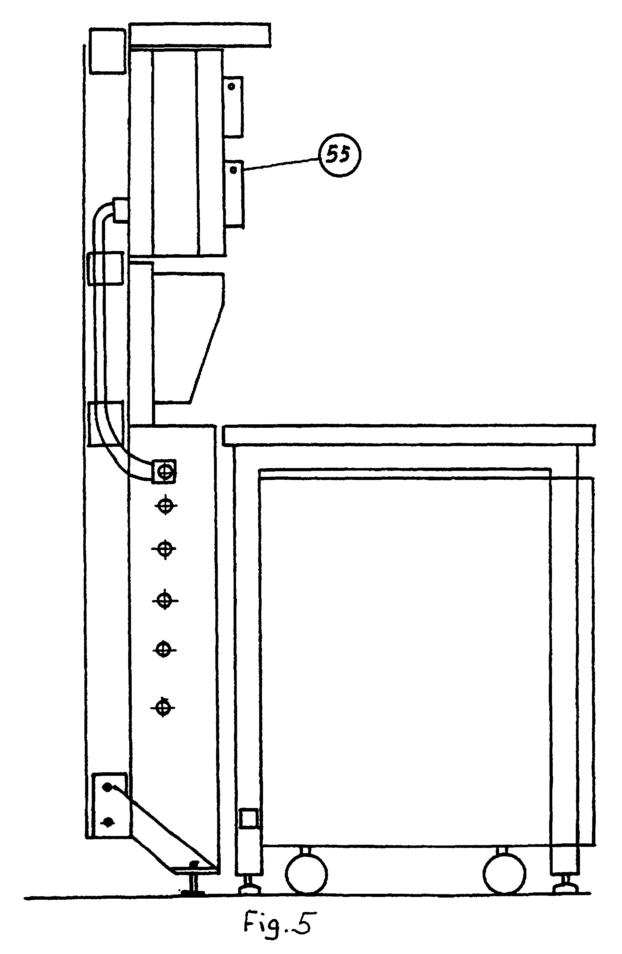

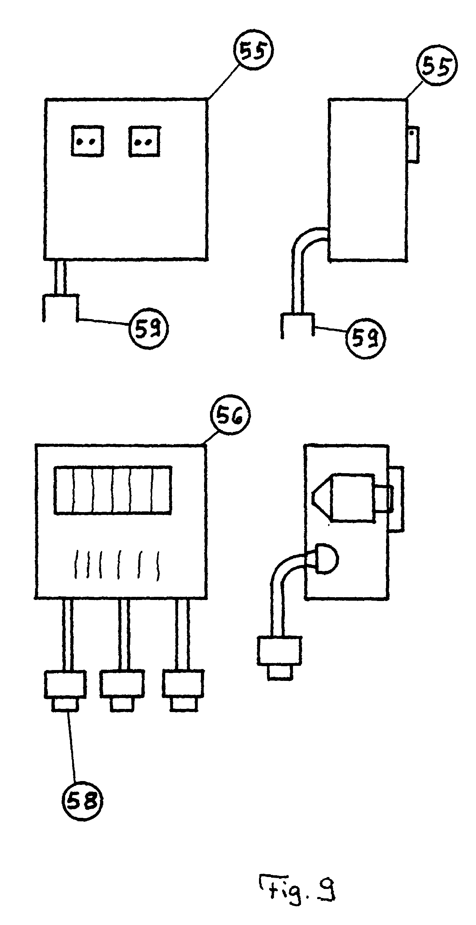

### 2. Elektromodul (Fig. 9, Fig.5, Fig. 15)

Das Entnahmemodul 55 hat eine größere Tiefe als die anderen Module jedoch die gleichen Abmessungen in der Höhe und in der Breite. Ein Verteilermodul 56 (siehe auch Fig. 15), in das die bauseitige Zuleitung 60 führt, enthält Klemmen und Sicherungen für die restlichen Module. Es enthält weiterhin wenigstens eine Abgangsbuchse 58. Die Entnahmemodule 55 weisen wenigstens eine 220 V oder 380 V Steckdose auf. Alle Entnahmemodule 55 sind mit einem Kabelstück mit Eingangsstecker versehen. Die Entnahmemodule 55 werden dadurch vom Verteilermodul 56 versorgt. Bei längeren Wegstrecken ist es möglich, Verlängerungskabeln vorzusehen, die im horizontalen Installationsraum geführt sind, während kurze Wegstrecken über Leitungen in Aussparungen 63 hinter den Modulen überbrückt werden können. Weiterhin können Kupplungsstücke 61 vorgesehen sein, so daß an einer Abgangsbuchse 58 eine Verzweigung zum Anschluß von mehreren Entnahmemodulen 55 an einer Abgangsleitung gebildet werden kann. In dieser Weise ist es ohne weiteres möglich, den Ort der Entnahmemodule 55 zu verändern.

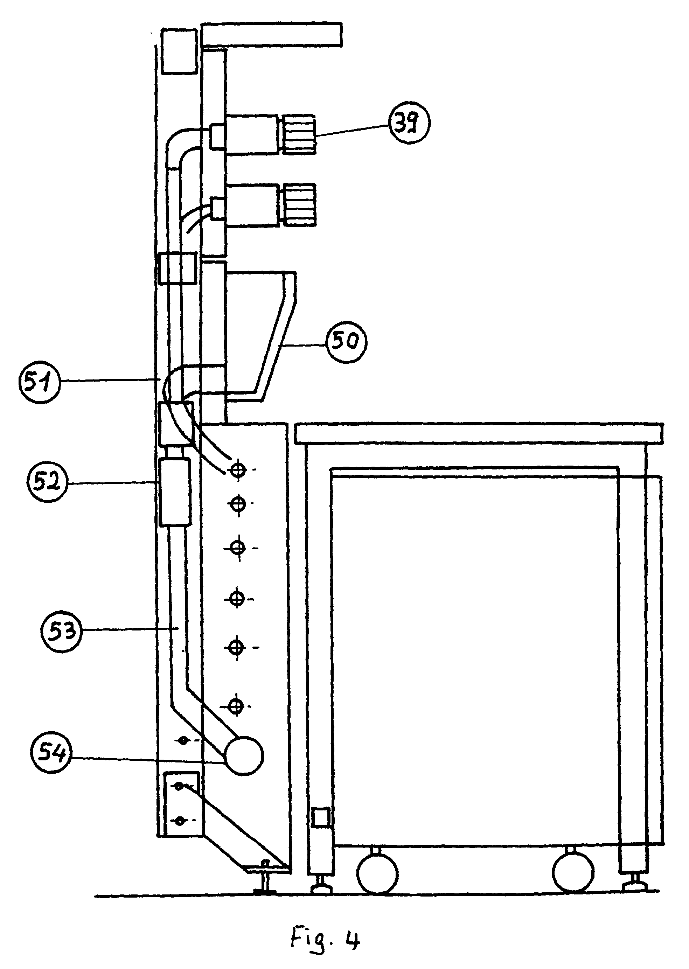

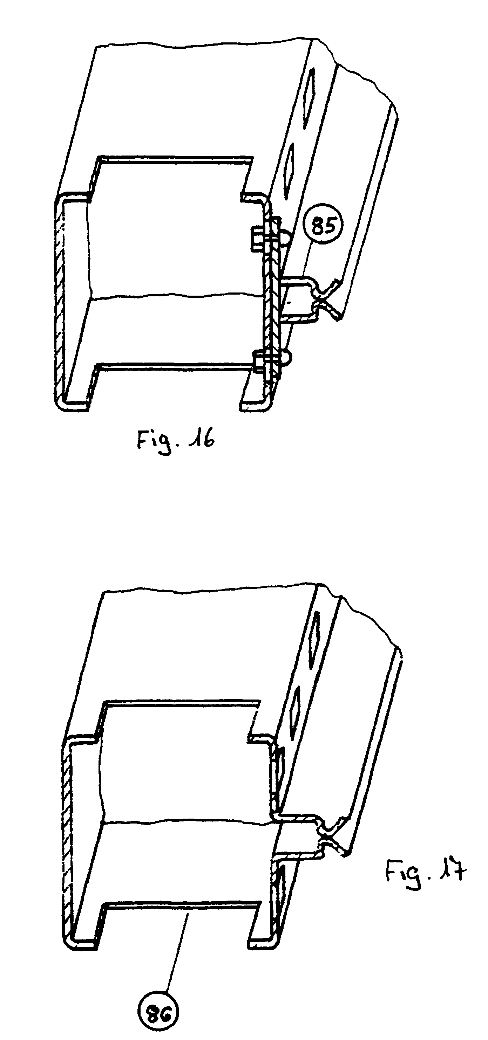

### 3. Sanitärmodul (Fig. 4, Fig. 14)

Das Sanitärmodul trägt die Sanitär-, Gas- und Reingasarmaturen. In einem Modul können zwei Reihen von Armaturen übereinander gesetzt werden, so daß auf einem Modul mit 300 mal 300 mm 5 Armaturen positioniert werden können. Die Armaturen weisen in der in Fig. 14 dargestellten Weise im hinteren Bereich ein Innengewinde auf. Der Anschluß erfolgt mit einem Anschlußwinkel, der auch für die Umlenkung nach unten sorgt. Der Anschlußwinkel hat ein langes Außengewinde, über das der Anschluß an der Armatur erfolgt. Die Armatur wird mit einer Kontermutter an das Modulgehäuse gepreßt und dort befestigt. Durch die Trennung zwischen dem Sanitäranschluß und der mechanischen Befestigung des Moduls wird die Montage stark erleichert. Die bisherige Befestigung durch Arretieren der Armatur führte oft zu Undichtigkeiten, da die Armatur nur bis zur Verikalposition gedreht werden durfte. Der Anschlußwinkel weist weiterhin eine Anschlußverschraubung bzw. Anschlußkupplung auf, an der ein Anschlußschlauch befestigt wird. Auf der anderen Seite wird dieser Schlauch in eine Verschraubung oder Kupplung gesteckt. Diese befindet sich in einem T-Stück der Durchgangsleitung, welche sich im Raum befindet. Da alle vertikalen Stichleitungen mit Schläuchen ausgeführt sind, kann das Modul 12 leicht demontiert und aus der Halteposition entfernt werden. Dann können die Schläuche demontiert werden und kann das Modul an einer anderen Stelle positioniert werden. Es ist auch eine Nachrüstung einer Armatur möglich, und Nachrüstungen gleicher Medien können problemlos erfolgen, indem einfach ein zusätzliches Kupplungsstück in die Stichleitung eingefügt wird.

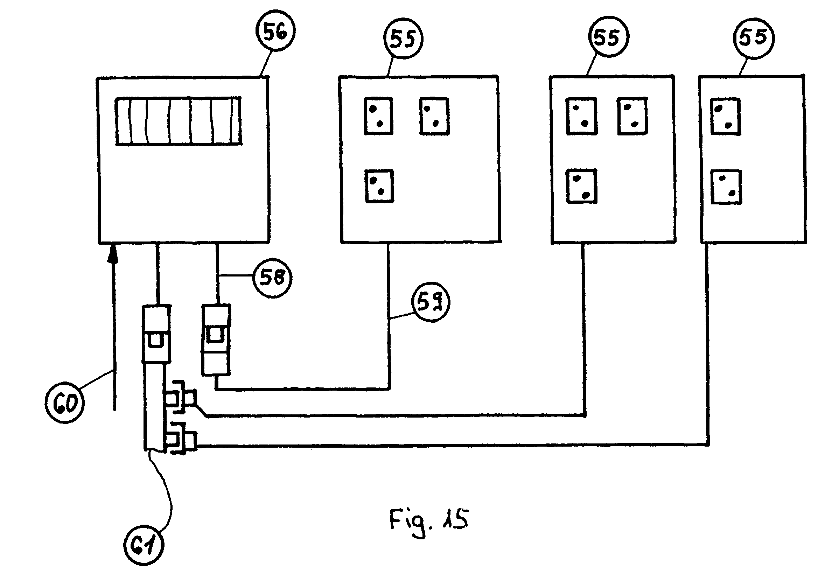

### 4. Beckenmodul (Fig. 13)

Ein Beckenmodul trägt auf dem Modulkörper ein Ablaufbecken 80. Das Ablaufbecken 80 wird von der Modulinnenseite her verschraubt oder mit dem Modul verklebt. Das hängt von dem Beckenwerkstoff ab. Keramikbecken müssen beispielsweise verklebt werden. Das Becken weist hinten einen Stutzen 83 auf, der zusammen mit einem Bogen 82 mit Dichtung einen Sanitäranschluß bildet. Hinter dem Bogen wird ein Syphon 84 angeschlossen. Anschließend wird die vertikale Stichleitung mit der Grundleitung verbunden. Der Einbau des Beckenmoduls in die Energiezelle hat einen entscheidenden Vorteil, da damit eine eindeutige Trennung zwischen der Energiezelle und dem Möbel, d.h. dem Arbeitstisch erzielt ist, der vor der Energiezelle steht. Zudem kann das Beckenmodul ausgetauscht werden.

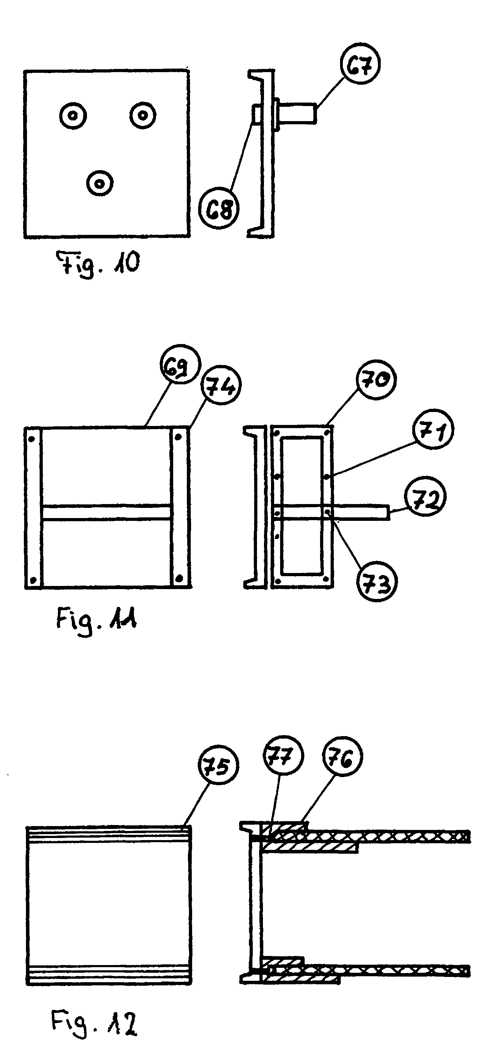

### 5. Stativmodul (Fig. 10)

Stative wurden bisher aus konstruktiven Gründen meist in Verbindung mit der Glasablage vorgesehen. Das stellt jedoch wiederum eine Kombination von nicht miteinander verbundene Bauteilen dar, so daß der Einsatz eines Stativmoduls die bessere Systemlösung ist. Die Stativhalter 67 werden von hinten mit einer Schraube 68 befestigt.

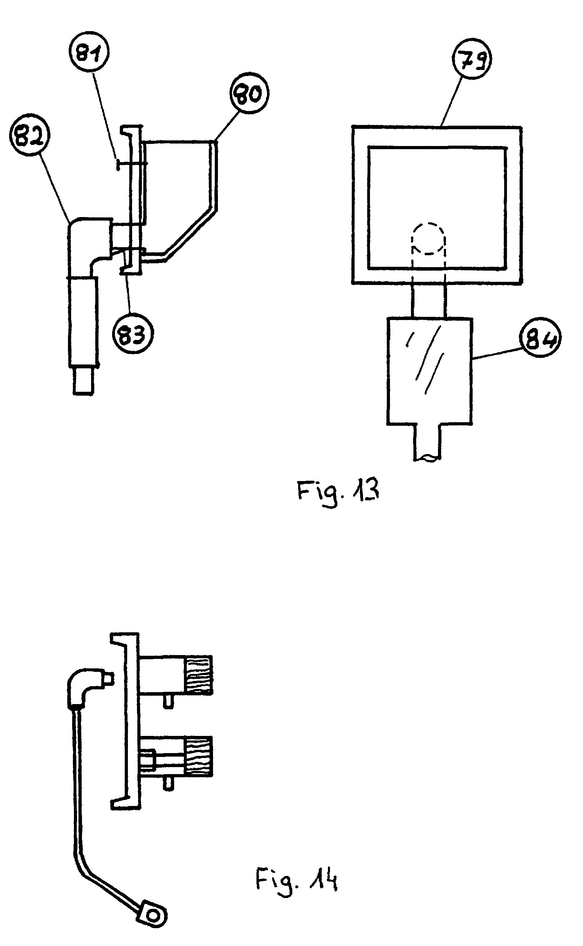

### 6. Ablagemodul (Fig. 11)

Ablagen sind ein wichtiges Bauteil eines Laborarbeitsplatzes. Am Ablagemodul sind Ablagehalter 70 beispielsweise mit Schrauben 74 befestigt. Die Ablagehalter 70 können Rasterbohrungen 71 aufweisen, an denen Ablageböden verschiedener Tiefe befestigt werden können. Die Ablagehalter 70 können auf einem Modul oder auf nebeneinander liegenden Modulen befestigt werden, um eine größere Spannbreite zu erzielen.

### 7. Glasablagemodul (Fig. 12)

Auch die Glasablagen werden an Modulen befestigt. Die Glashalteprofile 76 sind mittels Schrauben 77 über das Modul mit dem Querträger 7 verschraubt. Die Glasablagemodule können wie die Ablagemodule auch über mehrere Modulraster reichen.

### 8. Sonstige Bauteile

An den Modulen können noch beliebige weitere Bauteile angebracht werden. Es können beispielsweise Hängeschrankmodule, Module mit Verblendungen zur Decke oder schallhemmende Module vorgesehen sein. Die Module müssen nur im Raster liegen und in der gleichen Weise befestigt werden können.

Durch den oben beschriebenen modularen Aufbau ergibt sich eine große Planungsfreiheit, wobei weiterhin ohne weiteres erkennbar ist, daß auch bei der Montage noch Änderungen vorgenommen werden können. Ein weiterer Vorteil besteht darin, daß der Laborarbeitsplatz später problemlos an neue Anforderungen angepaßt werden kann.

Wichtig für den Gesamtaufbau des Laborarbeitssystems ist die Anordnung der Energiezelle und Module nebeneinander und/oder hintereinander in Form eines festen Rasters. Alle Energiezellen haben an beiden Seiten jeweils ein Ständerprofil 1, an einem Rücken-an-Rücken-Stoß stehen somit zwei Ständer. Damit können leicht bei einem Umbau ganze Energiezellenelemente weggenommen werden und an einer anderen Stelle wiederverwendet werden.

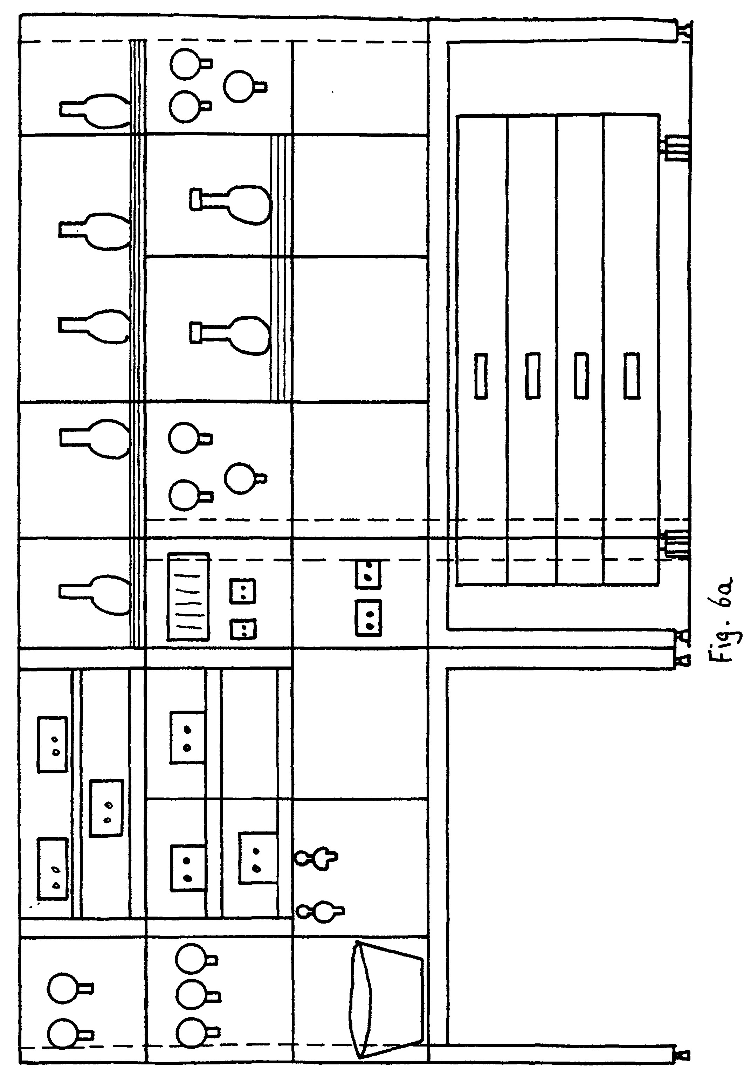

Ein Beispiel für diese Variabilität ist in Fig. 6a, b dargestellt.

In Fig. 6a sind zwei Energiezellen gezeigt, wobei oberhalb der Arbeitsfläche des Arbeitstisches drei Modulreihen vorgesehen sind. Die unterste Reihe besteht links aus einem Beckenmodul und anschließend aus Leermodulen. Die mittlere Reihe besteht aus zwei Sanitärmodulen, einem Leermodul, einem Sanitärmodul, zwei Ablagemodulen und einem Elektromodul. Die oberste Reihe besteht aus einem Sanitärmodul, zwei Ablagemodulen und fünf Glasablagemodulen. Vor der Einheit steht ein über drei Module breiter Arbeitstisch. Rechts davon besteht eine Verblendung, die über fünf Module reicht. Dort kann beispielsweise ein großes Gerät stehen.

Fig. 6b zeigt einen möglichen Umbau. Die Sanitärmodule wurden nicht verändert. Es wurde ein Elektromodul umgesetzt und es kamen mehrere Ablagemodule hinzu. Zusätzlich wurde ein weiterer Tisch vor die Einheit gesetzt. Damit ist ein Umbau von einem Gerätearbeitsplatz zu einem Laborarbeitsplatz erfolgt. Diese Umbauten können ohne in Anspruchnahme einer Fachfirma vom Laboranten selbst vorgenommen werden. Natürlich können auch die Sanitärmodule umgebaut werden oder kann durch Anbringen weiterer Module der Tisch von einer Arbeitshöhe von 900 mm auf 720 mm umgebaut werden.

Das obige Beispiel zeigt, daß die Arbeitstische von der Energiezelle vollständig unabhängig sind. Da die vertikalen Ständerprofile 1 der Energiezellen nicht sichtbar sind, müssen die Raster nicht aufeinander abgestimmt sein, als Material für die Ständerprofile 1 kann ein kostengünstiges Material ohne hochwertige Oberfläche, d.h. beispielsweise mit einer Verzinkung verwandt werden, was die Kosten herabsetzt.

## Patentansprüche

1. Laborarbeitsplatz mit wenigstens einer Energiezelle mit daran vorgesehener Medienversorgung und Einbauten und einem vor der Energiezelle stehenden Arbeitstisch, wobei die Energiezelle aus zwei vertikalen Ständern aufgebaut ist, die durch wenigstens zwei Querträger miteinander verbunden sind, und die Einbauten in Form eines Satzes von austauschbaren Modulen mit verschiedenen Funktionsmöglichkeiten vorgesehen sind, die über der Arbeitstischhöhe mit Halterungen angebracht sind, **dadurch gekennzeichnet, daß** die Halterungen an den Querträgern der Energiezelle vorgesehen sind und aus Klemmprofilen bestehen, die in einem Stück mit den Querträgern ausgebildet sind.

2. Laborarbeitsplatz nach Anspruch 1, **dadurch gekennzeichnet, daß** mehrere Energiezellen und die Module nebeneinander und/oder hintereinander in einem bestimmten Raster angeordnet sind.

3. Laborarbeitsplatz nach Anspruch 1, **gekennzeichnet durch** Federklammern, die in die Querträger eingesetzt sind und die Klemmprofile zusammendrücken.

4. Laborarbeitsplatz nach Anspruch 3, **dadurch gekennzeichnet, daß** die Federklammern von der Vorderseite der Klemmprofile nach hinten geschoben werden können.

5. Laborarbeitsplatz nach einem der vorhergehenden Ansprüche, **dadurch gekennzeichnet, daß** sich unter den Modulen Elektrosicherungs- und -verteilungsmodule befinden, die über Stekerverbindungen miteinander verbunden werden können.

6. Laborarbeitsplatz nach einem der vorhergehenden Ansprüche, **dadurch gekennzeichnet, daß** sich unter den Modulen Sanitärmodule befinden, die mit Armaturen versehen sind, die an der Rückseite der Sanitärmodule befestigt sind, wobei die Medienanschlüsse von der mechanischen Befestigung der Module unabhängig sind.

7. Laborarbeitsplatz nach einem der vorhergehenden Ansprüche, **dadurch gekennzeichnet, daß** die Module für die Medienanschlüsse über flexible Leitungen mit den Medienversorgungen der Energiezelle verbunden sind.

8. Laborabeitsplatz nach einem der vorhergehenden Ansprüche, **dadurch gekennzeichnet, daß** sich unter den Modulen Ablaufmodule befinden, an denen Ablaufbecken befestigt sind, die nach vorne abnehmbar sind.

9. Laborarbeitsplatz nach einem der vorhergehenden Ansprüche, **dadurch gekennzeichnet, daß** sich unter den Modulen Ablagemodule befinden, die eine einfache oder vielfache Rasterbreite haben.

10. Laborarbeitsplatz nach einem der vorhergehenden Ansprüche, **dadurch gekennzeichnet, daß** sich unter den Modulen Glasablagemodule befinden, die eine einfache oder vielfache Rasterbreite haben.

11. Laborarbeitsplatz nach einem der vorhergehenden Ansprüche, **dadurch gekennzeichnet, daß** die vertikalen Ständer der Energiezelle nicht bis zum Boden reichen.

## Claims

1. A laboratory work station comprising at least one energy cell with a supply of media provided thereon, and comprising built-in units, and comprising a workbench situated in front of the energy cell, wherein the energy cell is constructed from two vertical pillars which are joined to each other by at least two crossbeams, and the built-in units are provided in the form of an interchangeable set of modules with different functional possibilities which are mounted above the height of the workbench by holding devices, **characterised in that** the holding devices are provided on the crossbeams of the energy cell and consist of clamping sections which are formed in one piece with the crossbeams.

2. A laboratory work station according to claim 1, **characterised in that** a plurality of energy cells and the modules are disposed side by side and/or one behind another in a defined grid.

3. A laboratory work station according to claim 1, **characterised by** spring clips which are inserted in the crossbeams and which compress the clamping sections.

4. A laboratory work station according to claim 3, **characterised in that** the spring clips can be pushed backwards from the face of the clamping sections.

5. A laboratory work station according to any one of the preceding claims, **characterised in that** the modules include electrical securing and distribution modules which can be connected to each other via plug-in connectors.

6. A laboratory work station according to any one of the preceding claims, **characterised in that** the modules include sanitation modules which are provided with fittings which are fixed to the back of the sanitation modules, wherein the media connections are independent of the mechanical fixing of the modules.

7. A laboratory work station according to any one of the preceding claims, **characterised in that** the modules for the media connections are connected to the media supplies of the energy cell via flexible lines.

8. A laboratory work station according to any one of the preceding claims, **characterised in that** the modules include drainage modules to which drainage basins are fixed which can be removed from the front.

9. A laboratory work station according to any one of the preceding claims, **characterised in that** the modules include placement modules which have a single or multiple grid width.

10. A laboratory work station according to any one of the preceding claims, **characterised in that** the modules include glass placement modules which have a single or multiple grid width.

11. A laboratory work station according to any one of the preceding claims, **characterised in that** the vertical pillars of the energy cell do not reach as far as the floor.

## Revendications

1. Poste de travail de laboratoire comprenant au moins une cellule d'énergie pourvue d'une alimentation en fluides et de composants intégrés, et une table de travail agencée devant la cellule d'énergie, la cellule d'énergie étant formée par deux montants verticaux qui sont assemblés entre eux par au moins deux traverses, et les composants intégrés étant prévus sous la forme d'un jeu de modules amovibles avec différentes fonctionnalités, qui sont agencés avec des fixations au-dessus du niveau de la table de travail, **caractérisé en ce que** les fixations sont prévues au niveau des traverses de la cellule d'énergie et sont formées par des profilés de blocage, qui sont conçus d'une seule pièce avec les traverses.

2. Poste de travail de laboratoire selon la revendication 1, **caractérisé en ce que** plusieurs cellules d'énergie et les modules sont disposés côte à côte et/ou les uns derrière les autres selon un motif déterminé.

3. Poste de travail de laboratoire selon la revendication 1, **caractérisé par** des pinces à ressort, qui sont insérées dans les traverses et qui compriment les profilés de blocage.

4. Poste de travail de laboratoire selon la revendication 3, **caractérisé en ce qu'**il est possible de faire coulisser les pinces à ressort à partir de la face avant des profilés de blocage vers l'arrière.

5. Poste de travail de laboratoire selon l'une quelconque des revendications précédentes, **caractérisé en ce que** parmi les modules sont prévus des modules de fusibles électriques et des modules de distribution électrique, qui peuvent être reliés les uns aux autres par l'intermédiaire de connecteurs.

6. Poste de travail de laboratoire selon l'une quelconque des revendications précédentes, **caractérisé en ce que** parmi les modules sont prévus des modules sanitaires, qui sont munis de robinets, fixés sur la face arrière des modules sanitaires, les raccords d'acheminement des fluides étant indépendants de la fixation mécanique des modules.

7. Poste de travail de laboratoire selon l'une quelconque des revendications précédentes, **caractérisé en ce que** les modules pour les raccords d'acheminement des fluides sont assemblés par l'intermédiaire de tuyaux flexibles avec les systèmes d'alimentation en fluides de la cellule d'énergie.

8. Poste de travail de laboratoire selon l'une quelconque des revendications précédentes, **caractérisé en ce que** parmi les modules sont prévus des modules d'évacuation, au niveau desquels sont fixées des cuvettes d'évacuation, qui peuvent être retirées par l'avant.

9. Poste de travail de laboratoire selon l'une quelconque des revendications précédentes, **caractérisé en ce que** parmi les modules sont prévus des modules de réception, qui ont un pas de motif simple ou multiple.

10. Poste de travail de laboratoire selon l'une quelconque des revendications précédentes, **caractérisé en ce que** parmi les modules sont des modules de réception en verre, qui ont un pas de motif simple ou multiple.

11. Poste de travail de laboratoire selon l'une quelconque des revendications précédentes, **caractérisé en ce que** les montants verticaux de la cellule d'énergie ne descendent pas jusqu'au niveau du sol.
